# EUROPEAN PATENT APPLICATION

(11) **EP 4 467 623 A1**
(43) Date of publication of application: **27.11.2024**
(21) Application number: 23869317.0
(22) Date of filing: 13.06.2023
(51) Int. Cl.: C09J 133/08, C09J 133/10, H01M 50/40, H01M 50/409, H01M 50/411

(54) **BINDER FOR SECONDARY BATTERY, PREPARATION METHOD THEREFOR, SEPARATOR, BATTERY CELL, BATTERY AND ELECTRICAL APPARATUS**

(30) Priority: 07.04.2023 CN 202310369599
(71) Applicant: Contemporary Amperex Technology (Hong Kong) Limited, Central, Central And Western District (HK)
(72) Inventor: LI, Lei, Ningde, Fujian 352100 (CN); KANG, Haiyang, Ningde, Fujian 352100 (CN); ZHENG, Yi, Ningde, Fujian 352100 (CN); CHEN, Meihuang, Ningde, Fujian 352100 (CN); SUN, Chengdong, Ningde, Fujian 352100 (CN)
(74) Representative: Gong, Jinping
(86) International application number: PCT/CN2023/100001
(87) International publication number: WO 2024/207620

(57) **Abstract**

The present application relates to the technical field of secondary batteries, and in particular to a binder for secondary batteries and a preparation method thereof, a separator comprising the binder, a battery cell, a battery and an electrical apparatus. The binder for secondary batteries includes an organic polymer. The organic polymer has a first glass transition temperature and a second glass transition temperature, the first glass transition temperature is less than or equal to 25°C, and the second glass transition temperature is greater than 25°C. During coating of a separator, the binder is non-viscous at room temperature to facilitate winding and unwinding of the separator. However, the binder has a better bonding force when a cold pressing process is carried out after the winding with positive and negative electrode plates, so that the positive and negative electrode plates and the separator fit each other closely. Therefore, the binder of the present application increases a cold pressing bonding force between the separator and the positive and negative electrode plates, thereby improving hardness of a battery cell and cycling performance of a secondary battery.

## Description

### Cross reference to related applications

The present application claims priority to Chinese Patent Application No. 202310369599.5, filed on April 7, 2023, which is incorporated herein by reference in its entirety.

### Technical Field

The present application relates to the technical field of secondary batteries, and in particular to a binder for secondary batteries and a preparation method thereof, as well as a separator, a battery cell, a battery and an electrical apparatus.

### Background Art

With the rapid growth of portable electronic devices and electric vehicles, the demand for traction batteries is also growing. Electrochemical performances of batteries are also of increasing concern.

At present, battery cells have the problem of large openings, that is, a gap tends to form between an electrode plate and a separator, resulting in poor cycling performance of batteries.

### Summary of the Invention

A main objective of the present application is to provide a binder, aiming to improve a bonding force between a separator and an electrode plate by means of the binder, thereby improving battery performance.

To achieve the above objective, the present application provides a binder for secondary batteries. The binder includes an organic polymer, the organic polymer has a first glass transition temperature and a second glass transition temperature, the first glass transition temperature is less than or equal to 25°C, and the second glass transition temperature is greater than 25°C.

At a certain temperature, the structure of the organic polymer having the first glass transition temperature is in a ductile state, and can be deformed with an extrusion pressure. Since the structure of the separator and electrode plate has pores, part of the structure of the organic polymer can permeate the pores of the separator and electrode plate as the extrusion pressure acting on the organic polymer, so that the separator and the binder are bonded together to achieve a mechanical interlocking effect to realize bonding.

Because the first glass transition temperature and the second glass transition temperature of the organic polymer have a significant difference, during cold pressing at a certain temperature, the structure of the organic polymer having the first glass transition temperature is in a rubbery state, and the structure of the organic polymer having the second glass transition temperature is in a glassy state, making the binder "both ductile and hard". After the binder is coated on the separator, when no pressure is applied at a certain temperature, the binder is non-viscous and can meet requirements for winding and unwinding of the separator; when a certain pressure is applied, the binder shows pressure-sensitivity and good adhesion to meet requirements for the bonding force between the separator and the positive and negative electrode plates.

Therefore, with the binder of the present application, during coating of the separator, the binder is non-viscous at room temperature to facilitate the winding and unwinding of the separator. However, the binder has a better bonding force when a cold pressing process is carried out after the winding with the positive and negative electrode plates, so that the positive and negative electrode plates and the separator fit each other closely. Therefore, the binder of the present application increases a cold pressing bonding force between the separator and the positive and negative electrode plates, thereby improving hardness of a battery cell and cycling performance of a secondary battery.

Preferably, the first glass transition temperature ranges from -80°C to 25°C, preferably from - 60°C to 25°C.

Within the above range, the structure of the organic polymer having the first glass transition temperature is in a rubbery state, which is conducive to its adhesion during cold pressing and facilitates the bonding between the separator and the electrode plate after cold pressing, thereby improving battery performance.

Preferably, the second glass transition temperature ranges from 26°C to 100°C, preferably from 26°C to 90°C.

Within the above range, the structure of the organic polymer having the second glass transition temperature is in a glassy state, which can be used as a skeleton structure of the binder at a certain temperature, making the binder non-viscous to facilitate operations of winding and unwinding of the separator at a certain temperature.

Preferably, the organic polymer includes an acrylate copolymer, and/or, the organic polymer contains at least one of an ester group, a carboxyl group, an acrylamide group, a carbonyl group, an amide group and a nitrile group.

The acrylic copolymer has good adhesion, and the use of the acrylic copolymer makes the bonding between the separator and the electrode plate better after cold pressing.

The ester group may improve anti-swelling capacity of a polymer and, as a flexible monomer chain segment in a molecular chain segment, can regulate the glass transition temperature of the organic polymer, which helps to regulate the glass transition temperature of the polymer in a suitable range.

The carboxyl group can form a bond with functional groups on the electrode plate and separator material to improve the bonding effect.

The acrylamide group is conducive to polymerization of monomers, which functions to regulate the molecular weight and also has good adhesion.

The carbonyl and amide groups are beneficial to improving adhesion of the binder.

The nitrile group helps to improve the ionic conductivity and adhesion.

Optionally, the shape of the binder includes a spherical shape.

The spherical shape facilitates uniform dispersion during slurry mixing, thus facilitating uniform coating.

Preferably, the binder has a volume-based particle size Dv50 of 1 µm to 15 µm, preferably 5 µm to 10 µm, and/or, the binder has a number-based particle size Dn10 of 1 µm to 5 µm, preferably 1 µm to 3 µm.

In theory, the volume-based particle size Dv50 of the binder in the present application may be lower than 1 µm and higher than 15 µm, but considering that the binder of the present application is applied onto the separator, the volume-based particle size Dv50 of the binder cannot be too large and too small, to solve the problem that the passability of lithium ions (here is the example of a lithium-ion secondary battery, but of course, other types of secondary batteries can also be used) on the separator is reduced due to the binder blocking the pores of the separator, and solve the problem that energy density of a battery prepared later is affected due to a thicker coating formed by the binder coating on the separator. Therefore, the binder has a volume-based particle size Dv50 of 1 µm to 15 µm, preferably 5 µm to 10 µm.

The binder has a number-based particle size Dn10 within the above range, which can solve the problem that the passability of lithium ions (Here is the example of a lithium-ion secondary battery, but of course, other types of secondary batteries can also be used) on the separator is reduced due to the binder blocking the pores of the separator, and solve the problem that energy density of a battery prepared later is affected due to a thicker coating formed by the binder coating on the separator. Therefore, the binder has a number-based particle size Dn10 of 1 µm to 5 µm, preferably 1 µm to 3 µm.

Preferably, the organic polymer includes a first polymer and a second polymer, and the first polymer and the second polymer both include an acrylate copolymer.

The organic polymer includes a first polymer and a second polymer. It is to be understood that the organic polymer including the first polymer and the second polymer has a first glass transition temperature and a second glass transition temperature.

The acrylate copolymer has good adhesion, so the use of the acrylate copolymer allows for better bonding between the separator and the electrode plate after cold pressing.

Preferably, a mass ratio of the first polymer to the second polymer has a range value of 1: (0.1 - 10), preferably 1: (0.5-3).

The mass ratio of the first polymer to the second polymer is within the above range, so the problem that the binder is too ductile and affects the battery cell performance may be solved. For example, it solves the problem that the binder is too ductile which may result in the binder blocking the pores of the separator, and it solves the problem that the binder is too hard which affects the bonding effect. Therefore, a mass ratio of the first polymer to the second polymer has a range value of 1: (0.1-10), preferably 1: (0.5-3).

Preferably, the first polymer and/or the second polymer includes a first polymeric monomer, the first polymeric monomer having a structure including: 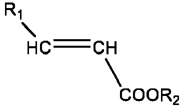 where R1 includes a hydrogen atom or an alkyl group with 1-12 carbon atoms, and R2 includes an alkyl group with 1-12 carbon atoms.

The first polymeric monomer contains an unsaturated ester group, which facilitates polymerization of monomers while improving anti-swelling capacity of the polymer and, as a flexible monomer chain segment in a molecular chain segment, can regulate the glass transition temperature of the organic polymer, thereby helping to regulate the glass transition temperature of the polymer in a suitable range.

Optionally, the first polymer monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The use of any one or more of the above first polymeric monomers allows for the adjustment of the glass transition temperature of the polymer and improves the anti-swelling capacity of the polymer.

Preferably, the first polymer includes a second polymeric monomer, the second polymeric monomer having a structure including: 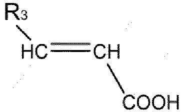 where R3 includes a hydrogen atom, and a substituted or unsubstituted alkyl group with 1-6 carbon atoms.

The second polymeric monomer includes an unsaturated carboxyl group, which facilitates polymerization of monomers. The first polymer includes the second polymeric monomer containing a carboxyl group, so that the carboxyl group can form a bond with functional groups on the separator and electrode plate materials in the process of pressing the separator and electrode plates by the cold pressing process, thus improving the bonding effect.

Preferably, the second polymeric monomer includes one or more of acrylic acid, methacrylic acid, butenoic acid, and heptenoic acid.

The adhesion of the first polymer can be adjusted by using any one or more of the second polymeric monomers above.

Preferably, the first polymer and/or the second polymer includes a third polymeric monomer, the third polymeric monomer having a structure including: 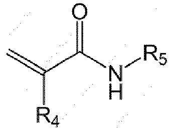 where R4 includes a hydrogen atom or an alkyl group with 1-6 carbon atoms and R5 includes a hydrogen atom, an alkyl group with 1-6 carbon atoms substituted with a hydroxyl group or an alkoxy group with 1-6 carbon atoms.

The structure of the third polymerization monomer includes an unsaturated amide group, which facilitates polymerization of monomers, and functions to regulate the molecular weight, and also has good adhesion.

Preferably, the third polymeric monomer includes one or more of acrylamide, N-hydroxymethylacrylamide and N-butoxymethylacrylamide.

The use of any one or more of the third polymeric monomer above may regulate the molecular weight of the polymer and regulate the molecular weight of the binder. The molecular weight of the binder is within a certain range, which helps to improve the adhesion.

Preferably, the second polymer includes a fourth polymeric monomer, the fourth polymeric monomer having a structure including: 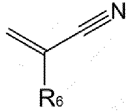 where R6 includes a hydrogen atom or an alkyl group with 1-6 carbon atoms.

The structure of the fourth polymeric monomer includes unsaturated cyano group, which facilitates polymerization of monomers and helps to improve the ionic conductivity and adhesion.

Preferably, the fourth polymeric monomer includes one or more of acrylonitrile and methacrylonitrile.

The ionic conductivity of the binder can be improved by using any one or more of the fourth polymeric monomers above.

The present application further provides a preparation method of a binder, including:
blending and stirring water, an emulsifier, an initiator, and constituent monomers of the first polymer, and heating and reacting to obtain a first polymer emulsion;
blending and stirring water, an emulsifier, an initiator, and constituent monomers of a second polymer, and heating and reacting to obtain a second polymer emulsion; and
mixing and stirring the first polymer emulsion and the second polymer emulsion, and performing spray drying to obtain the binder.

In the present application, the first polymer emulsion and the second polymer emulsion are obtained by emulsion polymerization, and the binder is obtained by spray drying.

Optionally, the step of mixing and stirring the first polymer emulsion and the second polymer emulsion, and performing spray drying to obtain the binder includes:
mixing and stirring the first polymer emulsion and the second polymer emulsion to obtain a mixed emulsion, where a mass ratio of the first polymer to the second polymer in the mixed emulsion has a range value of 1: (0.1-10), preferably 1: (0.5-3).

In order to obtain a second polymer and a second polymer having a suitable ratio in the binder to obtain a binder with suitable properties, in the step of mixing and stirring a first polymer emulsion and a second polymer emulsion to obtain a mixed emulsion, the mass ratio of the first polymer to the second polymer in the mixed emulsion has a range value of 1: (0.1-10), preferably 1: (0.5-3).

Embodiments of the present application further provide a separator, the separator includes the binder for secondary batteries described above or the binder prepared by the preparation method of a binder for secondary batteries described above.

Embodiments of the present application further provide a battery cell, the battery cell including the separator as described above.

Embodiments of the present application provide a battery, the battery including the battery cell described above.

Embodiments of the present application further provide an electrical apparatus, the electrical apparatus including the battery cell or secondary battery described above.

### Description of Drawings

To describe the technical solutions in the embodiments of the present application or in the prior art more clearly, the following briefly describes the accompanying drawings required for describing the embodiments or the prior art. Apparently, the accompanying drawings in the following description show merely some of the embodiments of The present application, and a person of ordinary skill in the art may still derive other drawings from the structures illustrated in these accompanying drawings without creative efforts.
Fig. 1 a scanning electron micrograph of a binder in Example 1 of the present application;
Fig. 2 is a flow chart of a preparation method of a binder according to an embodiment of the present application;
Fig. 3 is a schematic diagram of an electrode assembly according to an embodiment of the present application;
Fig. 4 is an exploded view of the electrode assembly according to an embodiment of the present application shown in Fig. 3; and
Fig. 5 is a schematic diagram of a battery module according to an embodiment of the present application;
Fig. 6 is a schematic diagram of a battery pack according to an embodiment of the present application;
Fig. 7 is an exploded view of the battery pack according to an embodiment of the present application shown in Fig. 6; and
Fig. 8 is a schematic diagram of an electrical apparatus according to an embodiment of the present application.

**Description of reference numerals:**

| No. | Name | No. | Name |
|---|---|---|---|
| 1 | Battery pack | 5 | Secondary battery |
| 2 | Upper box body | 51 | Case |
| 3 | Lower box body | 52 | Electrode assembly |
| 4 | Battery module | 53 | Top cover assembly |

The implementation of the objective, functional features and advantages of the present application will be further described in combination with embodiments and with reference to the accompanying drawings.

### Detailed Description

The following clearly and completely describes technical solutions in some embodiments of the present application with reference to the accompanying drawings in some embodiments of the present application. Apparently, the described embodiments are only some but not all of the embodiments of the present application. Based on the examples in the present application, all other examples obtained by those of ordinary skill in the art without creative effort fall within the protection scope of the present application.

Hereinafter, embodiments of a binder and a preparation method thereof of the present application, as well as a separator, an electrode assembly, a battery cell, a battery and an electrical apparatus comprising the binder are described in detail and specifically disclosed with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

Battery cells have the problem of large openings, that is, a gap tends to form between an electrode plate and a separator, resulting in poor cycling performance of batteries.

The commonly used binder for the separator is polyvinylidene fluoride. But at this stage, the price of polyvinylidene fluoride goes up high, the market supply is tight, while a hot pressing process is needed for achieving close bonding between the separator and the electrode plate. As the production speed increases, the hot pressing process will gradually be replaced by a cold pressing process. The cold pressing of electrode plates of batteries refers to shaping the rolled cores to reduce the resilience of the cores and improve the core assembly qualification rate and the thickness consistency of the finished cores.

If the bonding force between the positive and negative electrode plates and the separator is insufficient, it often causes problems such as battery cell opening and poor infiltration of the electrolyte solution, which cannot meet the demand of the secondary battery for the performance of the coated separator. Therefore, a close fit between the separator and the electrode plates can improve discharge capacity of the battery, reduce internal resistance, reduce polarization loss, prolong cycle life of the battery, and improve utilization of the secondary battery.

It is to be understood that the battery cell is formed by bonding the positive and negative electrode plates and the separator. The battery cell has a certain hardness, that is, because the bonded positive and negative electrode plates and the separator are adhered to and supported by each other, a structure with a certain thickness is formed, and the structure with a certain thickness has a certain hardness. The negative electrode will expand during the charge and discharge process. If the bonding force is weak, a gap will be formed between the positive and negative electrode plates and the separator. The positive and negative electrode plates and the separator cannot fit and support each other, resulting in a loose battery cell and lower hardness. In this case, the power performance of the battery cell will deteriorate, for example, the multiplier performance will be reduced, while the cycling performance will deteriorate. For example, in an electric vehicle, the loose battery cell may result in slower battery charging, while the cycling performance of the battery becomes poor, directly leading to shorter battery life, the need for frequent replacement of the battery in the electric vehicle, and increased cost for consumers on the electric vehicle.

Based on this, the present application provides a binder for secondary batteries. The binder includes an organic polymer. The organic polymer has a first glass transition temperature and a second glass transition temperature, the first glass transition temperature is less than or equal to 25°C, and the second glass transition temperature is greater than 25°C.

A binder refers to a material with adhesion, which is used to bond different substances together.

The glass transition temperature is a temperature at which a polymer changes from a high elastic state to a glassy state, and refers to a transition temperature of an amorphous polymer (including the non-crystalline part of a crystalline polymer) from the glassy state to the high elastic state or from the latter to the former, and is the lowest temperature at which the free movement of a macromolecular chain segment of the amorphous polymer, usually expressed as Tg. Above the glass transition temperature, the polymer shows a resilience; below the glass transition temperature, the polymer shows a brittleness. The glass transition temperature can be measured by methods commonly used in the art, for example, by the differential scanning calorimetry with reference to GB/T 19466.2.

It is to be understood that the first glass transition temperature is less than or equal to 25°C, such that at a certain temperature, the structure of the organic polymer having the first glass transition temperature is in the rubbery state; the second glass transition temperature is greater than 25°C, such that at a certain temperature, the structure of the organic polymer having the second glass transition temperature is in the glassy state.

For example, the first glass transition temperature is less than room temperature and the second glass transition temperature is greater than room temperature. At room temperature, when no pressure is applied to the binder, the second glass transition temperature is higher than room temperature, which refers to the glassy state. The structure of the organic polymer having the second glass transition temperature is harder and can serve as a skeleton structure of the binder powder, so that the binder is non-viscous. At room temperature, the first glass transition temperature is lower than room temperature, which refers to the rubbery state. After a certain pressure is applied to the binder, the structure can have certain "fluidity". The structure of the organic polymer having the first glass transition temperature can fully permeate the pores of the positive and negative electrode plates and separator, thus improving the mechanical interlocking effect, giving full play to its adhesion, and further helping to improve kinetic performance of the battery.

It is to be understood that at a certain temperature, the structure of the organic polymer having the first glass transition temperature is in a ductile state, and can be deformed with an extrusion pressure. Since the structure of the separator and electrode plate has pores, part of the structure of the organic polymer can permeate the pores of the separator and electrode plate as the extrusion pressure acting on the organic polymer, so that the separator and the binder are bonded together to achieve a mechanical interlocking effect to realize bonding.

Because the first glass transition temperature and the second glass transition temperature of the organic polymer have a significant difference, during cold pressing at a certain temperature, the structure of the organic polymer having the first glass transition temperature is in a rubbery state, and the structure of the organic polymer having the second glass transition temperature is in a glassy state, making the binder "both ductile and hard". After the binder is coated on the separator, when no pressure is applied at a certain temperature, the binder is non-viscous and can meet requirements for winding and unwinding of the separator; when a certain pressure is applied, the binder shows pressure-sensitivity and good adhesion to meet requirements for the bonding force between the separator and the positive and negative electrode plates.

Therefore, with the binder of the present application, during coating of the separator, the binder is non-viscous at room temperature to facilitate the winding and unwinding of the separator. However, the binder has a better bonding force when a cold pressing process is carried out after the winding with the positive and negative electrode plates, so that the positive and negative electrode plates and the separator fit each other closely. Therefore, the binder of the present application increases a cold pressing bonding force between the separator and the positive and negative electrode plates, thereby improving hardness of a battery cell and cycling performance of a secondary battery.

It is to be understood that the first glass transition temperature may be any value such as - 100°C, -90°C, -80°C, -70°C, -50°C, -30°C, -10°C, 10°C, 20°C, 24°C, and 25°C, and range values between any two of the above-mentioned point values, which is not specifically limited.

It is to be understood that the second glass transition temperature may be any value such as 26°C, 30°C, 50°C, 80°C, 100°C, and 200°C, and any range values between any two of the above-mentioned point values, which is not specifically limited.

In an embodiment, the first glass transition temperature ranges from -80°C to 25°C, preferably from -60°C to 25°C.

Within the above range, the structure of the organic polymer having the first glass transition temperature is in a rubbery state, which is conducive to its adhesion during cold pressing and facilitates the bonding between the separator and the electrode plate after cold pressing, thereby improving battery performance.

In the above range of -80°C to 25°C, the values taken include the minimum and maximum values of the range, and each value between such minimum and maximum values, and specific examples include, but are not limited to, point values in the embodiments, -80°C, -70°C, -60°C, - 50°C, -40°C, -30°C, -20°C, -10°C, 0°C, 10°C, 20°C, 25°C, etc., and range values between any two of the above-mentioned point values.

In the above range of -60°C to 25°C, the values taken include the minimum and maximum values of the range, and each value between such minimum and maximum values, and specific examples include, but are not limited to, point values in the embodiments, -60°C, -50°C, -40°C, - 30°C, -20°C, -10°C, 0°C, 10°C, 20°C, 25°C, etc., and range values between any two of the above-mentioned point values.

In an embodiment, the first glass transition temperature ranges from 26°C to 100°C, preferably from 26°C to 90°C.

Within the above range, the structure of the organic polymer having the second glass transition temperature is in a glassy state, which can be used as a skeleton structure of the binder at a certain temperature, making the binder non-viscous to facilitate operations of winding and unwinding of the separator at a certain temperature.

In the above range of 26°C to 100°C, the values taken include the minimum and maximum values of the range, and each value between such minimum and maximum values, and specific examples include, but are not limited to, point values in the embodiments, 26°C, 28°C, 30°C, 50°C, 80°C, 90°C, 100°C, etc., and range values between any two of the above-mentioned point values.

In the above range of 26°C to 90°C, the values taken include the minimum and maximum values of the range, and each of such minimum and maximum values, and specific examples include, but are not limited to, point values in the embodiments, 26°C, 28°C, 30°C, 50°C, 80°C, 90°C, etc., and range values between any two of the above-mentioned point values.

Preferably, the organic polymer includes an acrylate copolymer, and/or, the organic polymer contains at least one of an ester group, a carboxyl group, an acrylamide group, a carbonyl group, an amide group and a nitrile group.

For a copolymer, the polymerization reaction in which two or more monomers participate together is called co-polymerization, and the resulting polymer that contains two or more monomer units is called a copolymer or an interpolymer.

An acrylate copolymer is a polymer produced by copolymerization of an acrylate monomer and other copolymer monomers.

The acrylate monomer has an acrylate group in its structure, for example, methyl acrylate, ethyl acrylate, and n-butyl acrylate.

The acrylate copolymer has good adhesion, so the use of the acrylate copolymer allows for better bonding between the separator and the electrode plate after cold pressing.

The ester group, carboxyl group, acrylamide group, carbonyl group, amide group and nitrile group in the structure of organic polymers are tested according to the national standard GB/T 6040-2002 General rules for infrared spectroscopy analysis. By a preforming transmission method, a sample is subjected to preforming with KBr, and the KBr background blank is subtracted by the transmission method so as to obtain a sample test spectrum (resolution: 4cm⁻¹, wavenumber range: 400cm⁻¹ to 4000cm⁻¹).

The ester group improves anti-swelling capacity of a polymer and, as a flexible monomer chain segment in a molecular chain segment, can regulate the glass transition temperature of the organic polymer, which helps to regulate the glass transition temperature of the polymer in a suitable range.

The carboxyl group can form a bond with functional groups on the electrode plate and separator material to improve the bonding effect.

The acrylamide group is conducive to polymerization of monomers, which functions to regulate the molecular weight and also has good adhesion.

The carbonyl and amide groups are beneficial to improving the adhesion of the binder.

The nitrile group helps to improve the ionic conductivity and adhesion.

In an embodiment, the shape of the binder includes a spherical shape.

The spherical shape facilitates uniform dispersion during slurry mixing, thus facilitating uniform coating.
in an embodiment, the binder has a volume-based particle size Dv50 of 1 µm to 15 µm, preferably 5 µm to 10 µm, and/or, the binder has a number-based particle size Dn10 of 1 µm to 5 µm, preferably 1 µm to 3 µm.

For Dv50, the particle size of 50% of the total volume of sample particles is greater than this value, and the particle size of the other 50% of the total volume of the particles is less than this value. Dv50 can indicate the median particle size of the sample.

The particle size of 10% of the total number of sample particles is smaller than Dn10. The volume-based particle size Dv50 and the number-based particle size Dn10 of the binder can be tested using methods well known in the art. As an example, reference can be made to GB/T 19077-2016 and characterization tests can be carried out using a Malvern laser particle size analyzer, for example using an instrument such as Malvern Mastersizer-3000.

In theory, the volume-based particle size Dv50 of the binder in the present application may be lower than 1 µm and higher than 15 µm, but considering that the binder of the present application is applied onto the separator, the volume-based particle size Dv50 of the binder cannot be too large and too small, to solve the problem that the passability of lithium ions (here is the example of a lithium-ion secondary battery, but of course, other types of secondary batteries can also be used) on the separator is reduced due to the binder blocking the pores of the separator, and solve the problem that energy density of a battery prepared later is affected due to a thicker coating formed by the binder coating on the separator. Therefore, the binder has a volume-based particle size Dv50 of 1 µm to 15 µm, preferably 5 µm to 10 µm.

The binder has a particle size distribution by number Dn10 within the above range, which can solve the problem that the passability of lithium ions (Here is the example of a lithium-ion secondary battery, but of course, other types of secondary batteries can also be used) on the separator is reduced due to the binder blocking the pores of the separator, and solve the problem that energy density of a battery prepared later is affected due to a thicker coating formed by the binder coating on the separator Therefore, the binder has a number-based particle size Dn10 of 1 µm to 5 µm, preferably 1 µm to 3 µm.

In the above range of 1 µm to 15 µm, the values taken include the minimum and maximum values of the range, and each value between such minimum and maximum values, and specific examples include, but are not limited to, point values in the embodiments, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, etc., and range values between any two of the above-mentioned point values.

In the above range of 5 µm to 10 µm, the values taken include the minimum and maximum values of the range, and each value between such minimum and maximum values, and specific examples include, but are not limited to, point values in the embodiments, values of 5 µm, 6 µm, 7 µm, 8 µm, 9 µm, 10 µm etc., and range values between any two of the above-mentioned point values.

In the above range of 1 µm to 5 µm, the values taken include the minimum and maximum values of the range, and each value between such minimum and maximum values, and specific examples include, but are not limited to, point values in the embodiments, 1 µm, 2 µm, 3 µm, 4 µm, 5 µm, etc., and range values between any two of the above-mentioned point values.

In the above range of 1 µm to 3 µm, the values taken include the minimum and maximum values of the range, and each value between such minimum and maximum values, and specific examples include, but are not limited to, point values in the embodiments, 1 µm, 1.5 µm, 2 µm, 2.5 µm, 3 µm etc., and range values between any two of the above-mentioned point values.

In an embodiment, the organic polymer includes a first polymer and a second polymer, and the first polymer and the second polymer both include an acrylate copolymer.

The organic polymer includes a first polymer and a second polymer. It is to be understood that the organic polymer including the first polymer and the second polymer has a first glass transition temperature and a second glass transition temperature.

The acrylate copolymer has good adhesion, so the use of the acrylate copolymer allows for better bonding between the separator and the electrode plate after cold pressing.

In an embodiment, a mass ratio of the first polymer to the second polymer has a range value of 1: (0.1-10), preferably 1: (0.5-3).

The binder refers to secondary particles formed by agglomeration of primary particles of the first polymer and primary particles of the second polymer. Both the primary particles of the first polymer and the primary particles of the second polymer have the opportunity to be exposed to the surface of the secondary particles. By regulating the mass ratio of the first polymer to the second polymer, the opportunity for the first polymer to be exposed to the surface of the secondary particles is regulated so as to regulate the adhesion of the binder.

The mass ratio of the first polymer to the second polymer is within the above range, so the problem that the binder is too ductile and affects the battery cell performance may be solved. For example, it solves the problem that the binder is too ductile which may result in the binder blocking the pores of the separator, and it solves the problem that the binder is too hard which affects the bonding effect. Therefore, a mass ratio of the first polymer to the second polymer has a range value of 1: (0.1-10), preferably 1: (0.5-3).

In the above ratio of 1:(0.1-10), the values taken include the minimum and maximum values of the range, and each value between such minimum and maximum values, and specific examples include, but are not limited to, point values in the embodiments, 1:0.1, 1: 1, 1:2, 1:3, 1:4, 1:5, 1:6, 1:7, 1:8, 1:9, 1: 10 etc., and range values between any two of the above-mentioned point values.

In the above ratio of 1:(0.5-3), the values taken include the minimum and maximum values of the range, and each value between such minimum and maximum values, and specific examples include, but are not limited to, point values in the embodiments, 1:0.5, 1:1.5, 1:2, 1:2.5, 1:3, etc., and range values between any two of the above-mentioned point values.

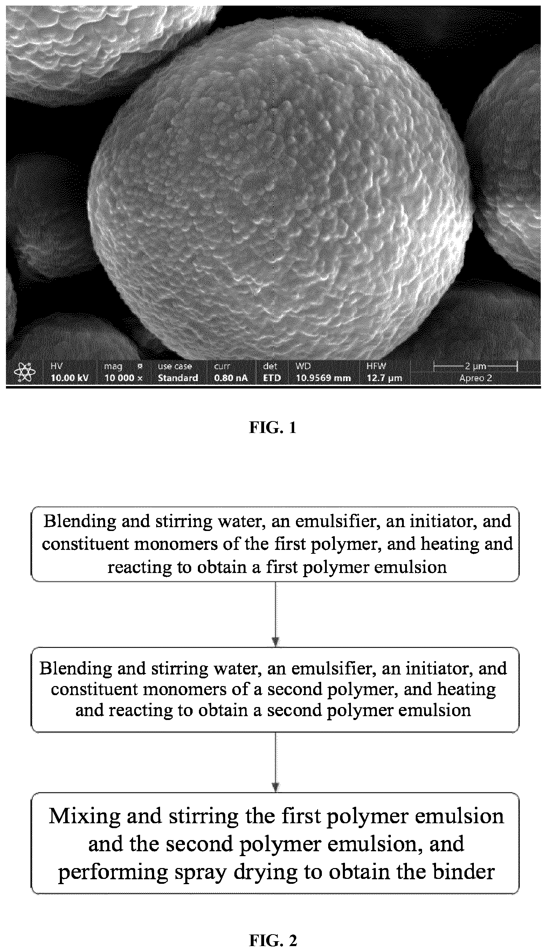

It is to be understood that, as shown in Fig. 1, the binder particles are secondary particles formed by the agglomeration of the primary particles of the first polymer and the primary particles of the second polymer, so that the second polymer acts as a skeleton in it, when the binder is not squeezed, the binder is non-viscous, and after being squeezed, the first polymer can deform under force and permeate the pores of the separator and electrode plate to achieve the bonding effect.

It is to be understood that a primary particle size of polymer latex of the first polymer and the polymer latex of the second polymer is 100 nm to 150 nm, and the particle size is 1 µm to 15 µm after the two latexes are mixed and subjected to spray drying, and accordingly the primary particles of the two polymers are mixed together and constitute the secondary granular spheres after spray drying.

In an embodiment, the first polymer and/or the second polymer includes a first polymerized monomer, and the first polymer and/or the second polymer includes a first polymerized monomer; the first polymeric monomer has a structure including 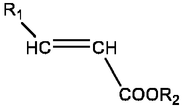 where R1 includes a hydrogen atom or an alkyl group with 1-12 carbon atoms, and R2 includes an alkyl group with 1-12 carbon atoms.

The first polymeric monomer contains an unsaturated ester group, which facilitates polymerization of monomers while improving anti-swelling capacity of the polymer and, as a flexible monomer chain segment in a molecular chain segment, can regulate the glass transition temperature of the organic polymer, thereby helping to regulate the glass transition temperature of the polymer in a suitable range.

In an embodiment, the first polymeric monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The use of any one or more of the above first polymeric monomers allows for the adjustment of the glass transition temperature of the polymer and improves the anti-swelling capacity of the polymer.

In one embodiment, the first polymer includes a second polymerizable monomer, and the structure of the second polymerizable monomer includes: 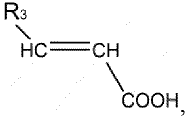 where R3 includes a hydrogen atom, a substituted or unsubstituted alkyl group with 1-6 carbon atoms.

The second polymeric monomer includes an unsaturated carboxyl group, which facilitates polymerization of monomers. The first polymer includes the second polymeric monomer containing a carboxyl group, so that the carboxyl group can form a bond with functional groups on the separator and electrode plate materials in the process of pressing the separator and electrode plates by the cold pressing process, thus improving the bonding effect.

In an embodiment, the second polymeric monomer includes one or more of acrylic acid, methacrylic acid, butenoic acid, and heptenoic acid.

The adhesion of the first polymer can be adjusted by using any one or more of the second polymeric monomers above.

In an embodiment, the first polymer and/or the second polymer includes a third polymeric monomer, the third polymeric monomer has a structure including: 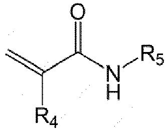 where R4 includes a hydrogen atom or an alkyl group with 1-6 carbon atoms and R5 includes a hydrogen atom, an alkyl group with 1-6 carbon atoms substituted with a hydroxyl group or an alkoxy group with 1-6 carbon atoms.

The structure of the third polymerization monomer includes an unsaturated amide group, which facilitates polymerization of monomers, and functions to regulate the molecular weight, and also has good adhesion.

In an embodiment, the third polymeric monomer incudes one or more of acrylamide, N-hydroxymethylacrylamide and N-butoxymethylacrylamide.

The use of any one or more of the third polymeric monomer above may regulate the molecular weight of the polymer and regulate the molecular weight of the binder. The molecular weight of the binder is within a certain range, which helps to improve the adhesion.

In an embodiment, the second polymer includes a second polymeric monomer, and the second polymeric monomer has a structure including: 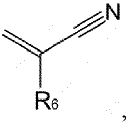 where R6 includes a hydrogen atom or an alkyl group with 1-6 carbon atoms.

The structure of the fourth polymeric monomer includes unsaturated cyano group, which facilitates polymerization of monomers and helps to improve the ionic conductivity and adhesion.

In an embodiment, the fourth polymeric monomer includes one or more of acrylonitrile and methacrylonitrile.

The ionic conductivity of the binder can be improved by using any one or more of the fourth polymeric monomers above.

Commonly used polyvinylidene fluoride binders require a hot pressing process to achieve better bonding. With production speed up and capacity saving, the hot pressing process will be gradually replaced by a cold pressing process. A wound battery cell is subjected to the cold pressing process. Since conventional polyvinylidene fluoride is a homopolymer with a crystallinity of about 50%, it leads to insufficient bonding between the separator and the positive and negative electrode plates. The conventional polyacrylate binder also does not meet the requirement for the bonding force under cold pressing, often resulting in problems such as opening of the battery cell and soft battery cell; moreover, the binder has poor infiltration of the electrolyte solution, which cannot meet the requirement of the secondary battery for performance of the coated separator.

The acrylate copolymer is prepared using the above monomers, which makes the binder have good adhesion. It is to be understood that the binder includes a first polymer and a second polymer. The first polymer is made from at least two of the first polymeric monomer, the second polymeric monomer, and the third polymeric monomer by means of emulsion polymerization. It is to be understood that the first polymer has better performance when it is composed of the three monomers described above, and that the second polymer emulsion is made from at least two of the first polymeric monomer, the third polymeric monomer and the fourth polymeric monomer by means of emulsion polymerization. It is to be understood that the second polymer has better performance when it is composed of the three monomers described above. The first polymer and the second polymer obtained by using the above monomers have suitable glass transition temperature, and when coated on the separator, can meet both the non-viscous nature of the binder at room temperature and the cold pressing bonding force between the separator and the positive and negative electrode sheets during the cold pressing process. This improves the hardness of the battery cell and overcomes the problem of cell opening and soft cell. Moreover, the binder is coated on the separator and applied to the secondary battery, which can improve cycling performance of the secondary battery.

The present application further provides a preparation method of a binder for secondary batteries, including: blending and stirring water, an emulsifier, an initiator, and constituent monomers of the first polymer, and heating and reacting to obtain a first polymer emulsion; blending and stirring water, an emulsifier, an initiator, and constituent monomers of a second polymer, and heating and reacting to obtain a second polymer emulsion; and mixing and stirring the first polymer emulsion and the second polymer emulsion, and performing spray drying to obtain the binder.

In the present application, the first polymer emulsion and the second polymer emulsion are obtained by emulsion polymerization, and the binder is obtained by spray drying. That is, the organic polymer includes the first polymer and the second polymer.

Emulsion polymerization refers to that with the help of the emulsifier and mechanical stirring, monomers are dispersed in water to form an emulsion, and then the initiator is added to initiate monomer polymerization.

Emulsifiers are a class of substances that can make mutually insoluble oil and water into an emulsion that is difficult to stratify. Emulsifiers are usually surfactants with a combination of properties of hydrophilic polar groups and hydrophobic (lipophilic) non-polar groups.

Initiators are substances that initiate a polymerization reaction with monomers. For example, radical initiators refer to a class of compounds that are readily decomposed by heat into radicals (i.e. primary radicals) and can be used to initiate radical polymerization and co-polymerization reactions of alkene and diene monomers.

Water, the emulsifier, the initiator, the constituent monomers of the first polymer are blended and stirred, the water and emulsifier are dispersion with stirring to form an emulsion, that is, the emulsifier forms micelles in an aqueous phase, most of the micelles are solubilized with monomers, and under the heating condition, the initiator triggers polymerization of the monomers inside the micelles to obtain an emulsion.

The spray drying refers to that a material to be dried (a mixture of the first polymer emulsion and the second polymer emulsion) is dispersed into very fine mist-like particles by a mechanical action, the particles are allowed to be in contact with hot air (after the area of water evaporation is expanded to accelerate the drying process), then most of water is removed in an instant, so that solids in the material are dried into powder.

The binder composed of the first polymer and the second polymer is obtained by the spray drying process.

In an embodiment, the step of mixing and stirring the first polymer emulsion and the second polymer emulsion, and performing spray drying to obtain a binder includes: mixing and stirring the first polymer emulsion and the second polymer emulsion to obtain a mixed emulsion, where a mass ratio of the first polymer to the second polymer in the mixed emulsion has a range value of 1: (0.1-10), preferably 1: (0.5-3).

In order to obtain a second polymer and a second polymer having a suitable ratio in the binder to obtain a binder with suitable properties, in the step of mixing and stirring a first polymer emulsion and a second polymer emulsion to obtain a mixed emulsion, the mass ratio of the first polymer to the second polymer in the mixed emulsion has a range value of 1: (0.1-10), preferably 1: (0.5-3).

Embodiments of the present application further provide a separator, the separator includes the binder described above or the binder prepared by the preparation method of a binder for secondary batteries described above. Since the binder adopts all the technical solutions of all the above embodiments, it has at least all the beneficial effects brought about by the technical solutions of the above embodiments, which will not be repeated here.

The separator is coated with the above-mentioned binder, which can improve the bonding between the electrode plate and the binder, and solve the problem of opening caused in the existing battery cell pre-cold pressing process.

Embodiments of the present application further provide a battery cell, the battery cell including the separator as described above. Since the separator adopts all the technical solutions of all the above embodiments, it has at least all the beneficial effects brought about by the technical solutions of the above embodiments, which will not be repeated here.

The separator described above is applied to the battery cell, so that the cycling performance of the battery cell in a large clamp can be improved.

The present application further provides a battery pack, including the battery cell described above. Since the battery cell adopts all the technical solutions of all the above embodiments, it has at least all the beneficial effects brought about by the technical solutions of the above embodiments, which will not be repeated here.

The battery group include a battery module and a battery pack.

Embodiments of the present application further provide an electrical apparatus, the electrical apparatus including the battery cell or secondary battery described above. Since the battery cell or the battery adopts all the technical solutions of all the above embodiments, it has at least all the beneficial effects brought about by the technical solutions of the above embodiments, which will not be repeated here.

Moreover, the electrode assembly, battery module, battery pack and electrical apparatus of the present application will be described hereafter with appropriate reference to the accompanying drawings.

In an embodiment of the present application, provided is an electrode assembly.

Generally, the electrode assembly includes a positive electrode plate, a negative electrode plate, an electrolyte, and a separator. During the charging and discharging process of the battery, active ions are intercalated and deintercalated back and forth between the positive electrode plate and the negative electrode plate. The electrolyte serves to conduct ions between the positive electrode plate and the negative electrode plate. The separator is disposed between the positive electrode plate and the negative electrode plate, and mainly functions to prevent a short circuit between the positive electrode and the negative electrode while allowing ions to pass through. The separator is the separator referred to above in the present application.

The positive electrode plate includes a positive electrode current collector and a positive electrode film layer provided on at least one surface of the positive electrode current collector.

As an example, the positive-electrode current collector has two opposite surfaces in its own thickness direction, and the positive electrode film layer is disposed on either or both of the two opposite surfaces of the positive-electrode current collector.

In some embodiments, the positive electrode current collector may be a metal foil current collector or a composite current collector. For example, an aluminum foil may be used as the metal foil. The composite current collector may include a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, when the electrode assembly is a lithium-ion battery, the positive electrode active material may be a positive electrode active material for lithium-ion batteries well known in the art. As an example, the positive electrode active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode sheet can be prepared by dispersing the components for preparing the positive electrode sheet, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode sheet.

The negative electrode sheet includes a negative-electrode current collector and a negative-electrode film layer arranged on at least one surface of the negative-electrode current collector, wherein the negative-electrode film layer includes a negative-electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative active material may include at least one of the following materials: artificial graphite, natural graphite, soft carbon, hard carbon, silicon-based material, tin-based material, and lithium titanate, etc. The silicon-based material may include at least one of elemental silicon, a silicon-oxygen compound, a silicon-carbon composite, a silicon-nitrogen composite, and a silicon alloy. The tin-based material may include at least one of elemental tin, tin-oxygen compound, or tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer may futher optionally comprise other auxiliaries, for example, a thickener (e. g., sodium carboxymethyl cellulose (CMC-Na)) and the like.

In some embodiments, the negative electrode sheet can be prepared by dispersing the components for preparing the negative electrode sheet, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode sheet.

The electrolyte plays the role of conduct ions between the positive electrode sheet and the negative electrode sheet. The type of the electrolyte is not particularly limited in the present application, and can be selected according to requirements.

In some embodiments, the electrolyte is an electrolyte solution. The electrolyte solution contains an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution may further optionally contain an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

In some embodiments, the electrode assembly further include a separator. The type of the separator is not particularly limited in the present application, and any well-known separator with a porous structure having good chemical stability and mechanical stability may be selected.

In some embodiments, the material of the separator may include at least one of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode sheet, the negative electrode sheet, and the separator may be made into an electrode assembly by a winding process or a lamination process.

In some embodiments, the electrode assembly may include an outer package. The outer package can be used to encapsulate the above-mentioned electrode assembly and electrolyte.

In some embodiments, the outer package of the electrode assembly may be a hard case, such as a hard plastic case, an aluminum case, or a steel case. The outer package of the electrode assembly may also be a soft pack, such as a bag-type soft pack. The material of the soft package can be plastic, and as plastic, polypropylene, polybutylene terephthalate, and polybutylene succinate can be enumerated.

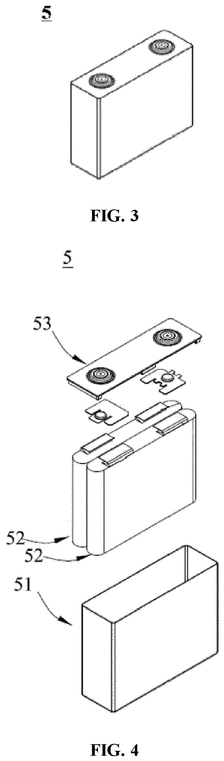

The present application has no particular limitation on the shape of the electrode assembly, which can be cylindrical, square or any other shape. For example, Fig. 3 is an example of a secondary battery 5 having a square structure.

In some embodiments, referring to Fig. 4, the outer package may include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 included in the secondary battery 5 may be one or more, which can be selected by those skilled in the art according to specific actual requirements.

In some embodiments, the electrode assemblies may be assembled into a battery module, and the number of the electrode assemblies included in the battery module may be one or more, and the specific number may be selected by those skilled in the art according to the application and capacity of the battery module.

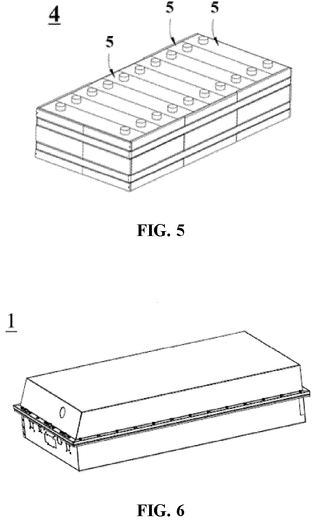

Fig. 5 shows a battery module 4 as an example. Referring to Fig. 5, in the battery module 4, multiple secondary batteries 5 may be sequentially arranged along a length direction of the battery module 4. Of course, any other arrangement is also possible. The plurality of secondary batteries 5 may further be fixed by fasteners.

Optionally, the battery module 4 can further include a case having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

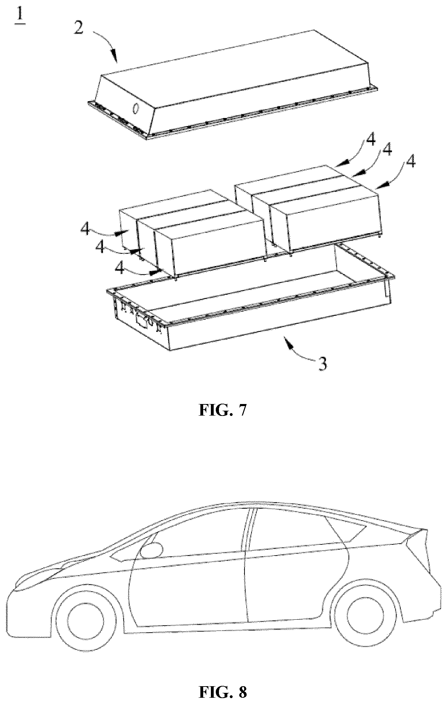

Figs. 6 and 7 show a battery pack 1 as an example. Referring to Figs. 6 and 7, the battery pack 1 may include a battery box and multiple battery modules 4 disposed in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, which includes at least one of the electrode assembly, the battery module, or the battery pack provided in the present application. The electrode assembly, the battery module or the battery pack may be used as a power source for the electrical apparatus or an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the electrode assembly, the battery module, or the battery pack may be selected according to its use requirements.

Fig. 8 is an example of an electrical apparatus. The electrical apparatus is a all-electric vehicle, a hybrid electric vehicle or a plug-in hybrid electric vehicle, and the like. In order to meet the requirements raised by the electrical apparatus for high power and high energy density of electrode assemblies, the battery pack or the battery module may be adopted.

As another example, the device may be a mobile phone, a tablet, a laptop, etc. The device is generally required to be light and thin, and can use an electrode assembly as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. All of the used agents or instruments which are not specified with the manufacturer are conventional commercially-available products.

### Preparation of first polymer emulsion

### Preparation Example A1

The first polymeric monomer methyl acrylate, the second polymeric monomer acrylic acid and the third polymeric monomer acrylamide were weighed according to a mass ratio of 90:5:5 of the three monomers, and then the monomers were mixed well. 1000 g of mixed monomer, 30 g of sodium dodecyl sulfate emulsifier, 10 g of ammonium persulfate initiator, 1200 g of deionized water were added in a 5000 mL four-necked flask provided with a mechanical agitator, a thermometer and a condensation tube, and stirred at a high speed to emulsify for 30 min. Under the protection of nitrogen, the temperature was raised to 75°C for reaction for 4 hours, then the temperature was lowered to below 40°C, the pH was adjusted to neutral, and filtering was performed to discharge to obtain a first polymer emulsion A1.

Preparation Examples A2 to Preparation Example A14: Preparation Examples A2 to A14: On the basis of Preparation Example A1, first polymer emulsions A2 to A14 were obtained by adjusting the monomer type and mass ratio.

### Preparation of second polymer emulsion

### Preparation Example B1

The first polymeric monomer methyl acrylate, the second polymeric monomer acrylamide and the third polymeric monomer acrylonitrile were weighed according to a mass ratio of 80:10:10 of the three monomers, and then the monomers were mixed well. 200 g of mixed monomer, 6 g of sodium dodecyl sulfate emulsifier, 2 g of ammonium persulfate initiator, 300 g of deionized water were added in a 1000 mL four-necked flask provided with a mechanical agitator, a thermometer and a condensation tube, and stirred at a high speed to emulsify for 30 min. Under the protection of nitrogen, the temperature was raised to 75°C for reaction for 4 hours, then the temperature was lowered to below 40°C, the pH was adjusted to neutral, and filtering was performed to discharge to obtain a first polymer emulsion B1.

Preparation Examples B2 to Preparation Example B14: Preparation Examples B2 to B14: On the basis of Preparation Example B1, first polymer emulsions B2 to B14 were obtained by adjusting the monomer type and mass ratio.

### Example 1

### Preparation of binder

The first polymer emulsion A1 and the second polymer emulsion B2 were weighed according to the weight percentage of the first polymer and the second polymer at 1:1, stirred and mixed well, and then the binder for the separator was prepared by the spray drying process, where conditions for the spray drying process include: inlet air temperature of 110°C, outlet air temperature of 50°C, and air pressure of 0.5 kPa.

Example 2 to Example 23: On the basis of Example 1, the types of the first polymer emulsion and the second polymer emulsion, as well as the mass ratio and Dv50, were adjusted to obtain Examples 2 to 23.

### Comparative Example 1 and Comparative Example 2

On the basis of Example 1, the types of the first polymer emulsion and the second polymer emulsion were adjusted to obtain Comparative Example 1 and Comparative Example 2.

Comparative Example 3: On the basis of Example 1, only the second polymer emulsion was weighed, and Comparative Example 3 of the binder for the separator was prepared by the spray drying process under the same conditions.

Comparative Example 4: On the basis of Example 1, only the first polymer emulsion was weighed, and Comparative Example 4 of the binder for the separator was prepared by the spray drying process under the same conditions.

### Preparation of separator

A commercially available PE microporous film (from Tricor Electronics Technology) with a thickness of 7µm and an average pore size of 80nm was used as a substrate. The separator binder prepared as above was mixed in deionized water to obtain a slurry (solid content of 20%). The slurry was sprayed on both surfaces of the substrate, dried to remove a solvent, where the coating composition was applied on the substrate with a coating density of 1.5 g/m², so as to obtain a separator.

### Preparation of positive electrode plate

Polyvinylidene fluoride (PVDF), lithium iron phosphate (LFP), a conductive agent carbon black and N-methylpyrrolidone (NMP) in a mass ratio of 1.2:58.38:0.42:40 were stirred and mixed well to obtain a positive electrode slurry. The positive electrode slurry was evenly coated onto a positive electrode collector aluminum foil with a loading of 200 g/m², followed by drying, cold pressing and slitting, to obtain a positive electrode plate.

### Preparation of negative electrode plate

Artificial graphite, a conductive agent acetylene black, a binder styrene-butadiene rubber (SBR) and a thickener sodium carboxymethyl cellulose (CMC-Na) were added into deionized water in a mass ratio of 96.2:1.0:1.6:1.2, mixed well to obtain a negative electrode slurry (solid content of 63%). The negative electrode slurry was coated on a negative electrode collector copper foil with a loading of 98g/m², followed by drying, cold pressing and slitting, to obtain a negative electrode plate.

### Preparation of electrolyte solution

Ethylene carbonate (EC), ethyl methyl carbonate (EMC), and diethyl carbonate (DEC) were mixed in a volume ratio of 1:1:1 at 25°C to obtain a mixed solvent, and then LiPF₆ was uniformly dissolved in the above mixed solvent to obtain an electrolyte solution, where LiPF₆ had a concentration of 1 mol/L.

### Preparation of secondary battery

The positive electrode plate, the separator and the negative electrode plate were stacked and wound in sequence, were shaped by cold pressing (during which the separator was bonded to the electrode plates) to obtain a battery cell; the battery cell was placed in an outer package, the electrolyte solution prepared above was added, followed by processes such encapsulating, standing, forming and aging, to obtain a secondary battery.

### Performance Test

### (1) Glass transition temperature test

Weigh 6±0.05 mg of sample and place it in an Al crucible, agitate and then cover, and test using a measuring instrument Netzsch DSC 3500 Sirius. Nitrogen atmosphere: purge gas rate of 50 mL/min and protective gas rate of 100 mL/min; temperature rise conditions: temperature rise rate of 10°C/min, temperature range of -70 to 200°C.

### (2) Particle size test

A laser particle size analyzer (Malvern 3000, MasterSizer 3000) with a helium-neon red light source as the main light source was used for testing. Prepare a small clean beake, sequentially add 1 g of the sample to be tested, a drop of surfactant, as well as 20 ml of deionized water in the beaker, followed by sonicating at 53 KHz/120 W for 5 min to ensure complete dispersion. Turn on the laser particle size meter, clean an optical system and then test the background automatically. Stirr the sonicated solution to be tested to make it evenly dispersed, place it in a sample vessel as required and start to test the particle size. Read measurement results from the instrument.

### (3) Cold pressure bonding test procedure

The negative electrode plate and the separator were stacked together and placed on a hot press with parameters set as: temperature of 25°C, pressure of 7t and time of 15s to produce a bonded separator/negative electrode plate sample by pressing; and the separator/electrode plate sample was cut into a rectangular sample strip of 150mm x 20mm. A test specimen was made by adhering one side of the electrode plate of the rectangular sample strip to a steel plate by double-sided tape, the separator was separated from the electrode plate by 2cm in a length direction at one end of the rectangular sample strip.

The steel plate was held horizontal and fixed with a lower fixture of universal testing machine (CTM2100, Xieqiang Instrument Manufacturing (Shanghai) Co., Ltd.). A release end of the separator as described above was fixed with an upper fixture of the universal testing machine and connected to a tensile machine. The testing conditions were set as a stretch rate of 20mm/min and a horizontal pull of 10 cm. After a tensile force was stabilized, a tensile force value was recorded, and according to a ratio of the tensile force value to a width of the sample, a bonding force between the separator and the electrode plate was obtained.

### (4) Battery cell hardness test procedure

A battery cell was placed on a table with both ends horizontal, the middle hollow part was fixed at a width of 12cm, the battery cell was placed flat naturally, and the hardness of the battery cell was tested by measuring the deviation of the centre of the battery cell from the horizontal datum line. The larger the center position of the battery cell deviates from the horizontal datum line, the poorer the hardness of the battery cell.

### (5) Battery cycling performance test procedure

The prepared battery was charged to 3.65 V at a constant current of 1/3 C at 25°C, then charged to a current of 0.05 C at a constant voltage of 3.65 V, followed by standing for 5 min, then discharged to 2.5 V at 1/3 C, where the resulting discharged capacity was denoted as an initial capacity C0. The above steps were repeated for the same battery and the discharge capacity Cn of the battery after the 500th cycle was recorded. The battery capacity retention rate after each cycle is Pn=(Cn/C0)×100%. This means that the difference in cycling performance can be reflected by the battery capacity retention rate at 500 cycles.

**Table 1 Table of preparation parameters of first polymer emulsion**

| Type | First polymeric monomer | Second polymeric monomer | Third polymeric monomer | Mass ratio |
|---|---|---|---|---|
| A1 | Methyl acrylate | Acrylic acid | Acrylamide | 90:5:5 |
| A2 | Methyl acrylate | Acrylic acid | Acrylamide | 80:10:10 |
| A3 | n-Butyl acrylate | Acrylic acid | N-Hydroxymethylacrylamide | 90:5:5 |
| A4 | n-Butyl acrylate | Acrylic acid | N-Hydroxymethylacrylamide | 80:10:10 |
| A5 | n-Butyl acrylate | Acrylic acid | N-Hydroxymethylacrylamide | 70:15:15 |
| A6 | n-Butyl acrylate | Acrylic acid | N-Hydroxymethylacrylamide | 60:20:20 |
| A7 | n-Butyl acrylate | Acrylic acid | N-Hydroxymethylacrylamide | 50:25:25 |
| A8 | Lauryl methacrylate | Methacrylic acid | N-Hydroxymethylacrylamide | 90:5:5 |
| A9 | Lauryl methacrylate | Methacrylic acid | N-Hydroxymethylacrylamide | 80:10:10 |
| A10 | Lauryl methacrylate | Methacrylic acid | N-Hydroxymethylacrylamide | 70:15:15 |
| A11 | Lauryl methacrylate | Methacrylic acid | N-Hydroxymethylacrylamide | 60:20:20 |
| A12 | Lauryl methacrylate | Methacrylic acid | N-Hydroxymethylacrylamide | 50:25:25 |
| A13 | Methyl acrylate | Acrylic acid | Acrylamide | 90:0:10 |
| A14 | n-Butyl acrylate | Acrylic acid | N-Hydroxymethylacrylamide | 30:30:40 |

**Table 2 Table of preparation parameters of second polymer emulsion**

| Type | First polymeric monomer | Third polymeric monomer | Fourth polymeric monomer | Mass ratio |
|---|---|---|---|---|
| B1 | Methyl acrylate | Acrylamide | Acrylonitrile | 80:10:10 |
| B2 | Methyl acrylate | Acrylamide | Acrylonitrile | 70:15:15 |
| B3 | Methyl acrylate | Acrylamide | Acrylonitrile | 60:20:20 |
| B4 | Methyl acrylate | Acrylamide | Acrylonitrile | 50:25:25 |
| B5 | Butyl methacrylate | N-Hydroxymethyla crylamide | Methacrylonitrile | 90:5:5 |
| B6 | Butyl methacrylate | N-Hydroxymethyla crylamide | Methacrylonitrile | 80:10:10 |
| B7 | Butyl methacrylate | N-Hydroxymethyla crylamide | Methacrylonitrile | 70:15:15 |
| B8 | Butyl methacrylate | N-Hydroxymethyla crylamide | Methacrylonitrile | 60:20:20 |
| B9 | tert-Butyl acrylate | N-Hydroxymethyla crylamide | Acrylonitrile | 90:5:5 |
| B10 | tert-Butyl acrylate | N-Hydroxymethyla crylamide | Acrylonitrile | 80:10:10 |
| B11 | tert-Butyl acrylate | N-Hydroxymethyla crylamide | Acrylonitrile | 70:15:15 |
| B12 | tert-Butyl acrylate | N-Hydroxymethyla crylamide | Acrylonitrile | 60:20:20 |
| B13 | tert-Butyl acrylate | N-Hydroxymethyla crylamide | Acrylonitrile | 90:10:0 |
| B14 | tert-Butyl acrylate | N-Hydroxymethyla crylamide | Acrylonitrile | 50:25:25 |

**Table 3 Table of preparation parameters of binder for separator**

| Serial Number | First polymer | Second polymer | Mass ratio of first polymer to second polymer | Volume median particle size Dv50 /µm |
|---|---|---|---|---|
| Example 1 | A1 | B2 | 1:1 | 7 |
| Example 2 | A7 | B2 | 1:1 | 7 |
| Example 3 | A11 | B2 | 1:1 | 7 |
| Example 4 | A1 | B6 | 1:1 | 7 |
| Example 5 | A1 | B10 | 1:1 | 7 |
| Example 6 | A1 | B2 | 1:0.1 | 7 |
| Example 7 | A1 | B2 | 1:5 | 7 |
| Example 8 | A1 | B2 | 1:10 | 7 |
| Example 9 | A1 | B2 | 1:12 | 7 |
| Example 10 | A7 | B2 | 1:1 | 0.5 |
| Example 11 | A7 | B2 | 1:1 | 1 |
| Example 12 | A7 | B2 | 1:1 | 10 |
| Example 13 | A7 | B2 | 1:1 | 15 |
| Example 14 | A7 | B2 | 1:1 | 18 |
| Example 15 | A2 | B1 | 1:1 | 7 |
| Example 16 | A3 | B3 | 1:1 | 7 |
| Example 17 | A4 | B4 | 1:1 | 7 |
| Example 18 | A5 | B5 | 1:1 | 7 |
| Example 19 | A6 | B7 | 1:1 | 7 |
| Example 20 | A8 | B8 | 1:1 | 7 |
| Example 21 | A9 | B9 | 1:1 | 7 |
| Example 22 | A10 | B11 | 1:1 | 7 |
| Example 23 | A12 | B12 | 1:1 | 7 |
| Comparative Example 1 | A14 | B14 | 1:1 | 7 |
| Comparative Example 2 | A14 | B13 | 1:1 | 7 |
| Comparative Example 3 | / | B2 | / | 7 |
| Comparative Example 4 | A1 | / | / | 7 |

**Table 4 Performance test parameter table**

| Serial Number | First glass transition temperature Tg/°C | Second glass transition temperature Tg/°C | Cold-pressing bonding force (N/m) | Battery cell center deviation (mm) | Capacity Retention Rate (%) |
|---|---|---|---|---|---|
| Example 1 | 16.9 | 38.5 | 26.42 | 0.00 | 97 |
| Example 2 | 9.5 | 38.5 | 22.87 | 0.00 | 96 |
| Example 3 | -13.3 | 38.5 | 22.12 | 0.00 | 96 |
| Example 4 | 16.9 | 46.5 | 24.76 | 0.00 | 96 |
| Example 5 | 16.9 | 68.8 | 23.61 | 0.00 | 96 |
| Example 6 | 16.9 | 38.5 | 8.36 | 0.00 | 91 |
| Example 7 | 16.9 | 38.5 | 17.50 | 0.00 | 95 |
| Example 8 | 16.9 | 38.5 | 14.37 | 0.00 | 94 |
| Example 9 | 16.9 | 38.5 | 5.56 | 0.00 | 89 |
| Example 10 | 9.5 | 38.5 | 6.39 | 1.50 | 90 |
| Example 11 | 9.5 | 38.5 | 10.43 | 0.00 | 93 |
| Example 12 | 9.5 | 38.5 | 23.12 | 0.00 | 96 |
| Example 13 | 9.5 | 38.5 | 19.30 | 0.00 | 95 |
| Example 14 | 9.5 | 38.5 | 5.63 | 2.00 | 89 |
| Example 15 | 24.8 | 27.6 | 15.54 | 0.00 | 94 |
| Example 16 | -44.4 | 50.1 | 17.63 | 0.00 | 95 |
| Example 17 | -33.1 | 62.7 | 18.45 | 0.00 | 95 |
| Example 18 | -20.4 | 36.4 | 19.57 | 0.00 | 95 |
| Example 19 | -6.3 | 55.6 | 21.28 | 0.00 | 96 |
| Example 20 | -54.1 | 68.7 | 22.01 | 0.00 | 96 |
| Example 21 | -41.9 | 61.8 | 19.42 | 0.00 | 95 |
| Example 22 | -28.4 | 76.2 | 18.37 | 0.00 | 95 |
| Example 23 | 3.9 | 84 | 18.21 | 0.00 | 95 |
| Comparative Example 1 | 48.9 | 92.1 | 3.87 | 4.20 | 86 |
| Comparative Example 2 | 48.9 | 62.7 | 3.98 | 3.40 | 88 |
| Comparative Example 3 | / | 38.5 | 5.23 | 5.20 | 83 |
| Comparative Example 4 | 16.9 | / | 3.56 | 4.60 | 85 |

The first polymer and the second polymer are prepared by suitable monomers, the glass transition temperature of the first polymer and the second polymer is regulated in a suitable range, and the binder is obtained by the spray drying process. The binder has good adhesion in a suitable range, is applied to the separator, and is beneficial to improve battery performance.

The foregoing descriptions are merely some preferred embodiments of the present application, but are not intended to limit the patent scope of the present application. Any equivalent structural transformations or equivalent process transformations made under the application concept of the present application by using the content of the specification and accompanying drawings, or direct/indirect application of the content of the specification and accompanying drawings to other related technical fields should fall within the patent protection scope of the present application.

## Claims

1. A binder for secondary batteries, comprising an organic polymer, the organic polymer having a first glass transition temperature and a second glass transition temperature, the first glass transition temperature being less than or equal to 25°C, and the second glass transition temperature being greater than 25°C.

2. The binder for secondary batteries according to claim 1, wherein the first glass transition temperature ranges from -80°C to 25°C, preferably from -60°C to 25°C.

3. The binder for secondary batteries according to claim 1 or 2, wherein the second glass transition temperature ranges from 26°C to 100°C, preferably from 26°C to 90°C.

4. The binder for secondary batteries according to any one of claims 1 to 3, wherein the organic polymer comprises an acrylate copolymer, and/or, the organic polymer comprises at least one of an ester group, a carboxyl group, an acrylamide group, a carbonyl group, an amide group and a nitrile group.

5. The binder for secondary batteries according to any one of claims 1 to 4, wherein the shape of the binder comprises a spherical shape.

6. The binder for secondary batteries according to any one of claims 1 to 5, wherein the binder has a volume-based particle size Dv50 of 1 µm to 15 µm, preferably 5 µm to 10 µm, and/or, the binder has a number-based particle size Dn10 of 1 µm to 5 µm, preferably 1 µm to 3 µm.

7. The binder for secondary batteries according to any one of claims 1 to 6, wherein the organic polymer comprises a first polymer and a second polymer, the first polymer and the second polymer both comprising an acrylate copolymer.

8. The binder for secondary batteries according to claim 7, wherein a mass ratio of the first polymer to the second polymer has a range value of 1: (0.1-10), preferably 1: (0.5-3).

9. The binder for secondary batteries according to claim 7 or 8, wherein the first polymer and/or the second polymer comprises a first polymeric monomer, the first polymeric monomer having a structure comprising: 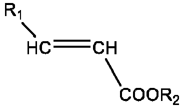 wherein R1 comprises a hydrogen atom or an alkyl group with 1-12 carbon atoms, and R2 comprises an alkyl group with 1-12 carbon atoms.

10. The binder for secondary batteries according to claim 9, wherein the first polymeric monomer comprises one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

11. The binder for secondary batteries according to any one of claims 7 to 10, wherein the first polymer comprises a second polymeric monomer, the second polymeric monomer having a structure comprising: 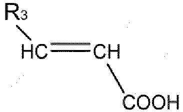 wherein R3 comprises a hydrogen atom, and a substituted or unsubstituted alkyl group with 1-6 carbon atoms.

12. The binder for secondary batteries according to claim 11, wherein the second polymeric monomer comprises one or more of acrylic acid, methacrylic acid, butenoic acid, and heptenoic acid.

13. The binder for secondary batteries according to any one of claims 7 to 12, wherein the first polymer and/or the second polymer comprises a third polymeric monomer, the third polymeric monomer having a structure comprising: 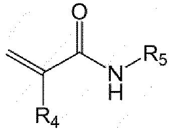 wherein R4 comprises a hydrogen atom or an alkyl group with 1-6 carbon atoms and R5 comprises a hydrogen atom, an alkyl group with 1-6 carbon atoms substituted with a hydroxyl group or an alkoxy group with 1-6 carbon atoms.

14. The binder for secondary batteries according to claim 13, wherein the third polymeric monomer comprises one or more of acrylamide, N-hydroxymethylacrylamide and N-butoxymethylacrylamide.

15. The binder for secondary batteries according to any one of claims 7 to 14, wherein the second polymer comprises a fourth polymeric monomer, the fourth polymeric monomer having a structure comprising: 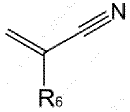 wherein R6 comprises a hydrogen atom or an alkyl group with 1-6 carbon atoms.

16. The binder for secondary batteries according to claim 15, wherein the fourth polymeric monomer comprises one or more of acrylonitrile and methacrylonitrile.

17. A preparation method of a binder for secondary batteries according to any one of claims 1 to 16, comprising:
blending and stirring water, an emulsifier, an initiator, and constituent monomers of the first polymer, and heating and reacting to obtain a first polymer emulsion;
blending and stirring water, an emulsifier, an initiator, and constituent monomers of the second polymer, and heating and reacting to obtain a second polymer emulsion; and
mixing and stirring the first polymer emulsion and the second polymer emulsion, and performing spray drying to obtain the binder.

18. A separator, comprising the binder for secondary batteries according to any one of claims 1 to 16 or the binder prepared by the preparation method of a binder for secondary batteries according to claim 17.

19. A battery cell, comprising the separator according to claim 18.

20. A battery, comprising the battery cell according to claim 19.

21. An electrical apparatus, comprising the battery cell according to claim 19 or the battery according to claim 20.
